# EUROPÄISCHE PATENTSCHRIFT

(11) **EP 1 316 477 B1**
(45) Veröffentlichungstag und Bekanntmachung des Hinweises auf die Patenterteilung: **19.03.2008**
(21) Anmeldenummer: 02025471.0
(22) Anmeldetag: 15.11.2002
(51) Int. Cl.: B60R 16/00, B60R 16/08

(54) **Halterung für elektro-pneumatische Bauteile im Kraftfahrzeug**
Support for electro-pneumatic components in a vehicle
Fixation pour composants électropneumatiques dans un véhicule

(30) Priorität: 01.12.2001 DE 10159065
(43) Veröffentlichungstag der Anmeldung: 04.06.2003
(73) Patentinhaber: Pierburg GmbH, 41460 Neuss (DE)
(72) Erfinder: Denne, Albert, 40667 Meerbusch (DE); Zurke, Janust, 42277 Wuppertal (DE); Dohrmann, Rolf, 41564 Kaarst (DE)
(74) Vertreter: Patentanwälte ter Smitten

(56) Entgegenhaltungen:
- EP-A- 0 691 250
- US-A- 5 374 114
- US-A- 5 611 372
- US-B1- 6 254 048

## Beschreibung

Die Erfindung betrifft eine Halterung für elektro-pneumatische Bauteile für Kraftfahrzeuge. Bei elektro-pneumatischen Bauteilen handelt es sich beispielsweise um elektro-pneumatische Druckwandler oder elektro-magnetische Umschaltventile.

Elektro-pneumatische Druckwandler sind beispielsweise in EP 0 105 808 und DE 41 10 003 beschrieben. Derartige Druckwandler weisen beispielsweise drei pneumatische Anschlüsse auf, wobei einer der Anschlüsse mit einem Unterdruckerzeuger, einer der Anschlüsse mit Umgebungs- bzw. Atmosphärendruck und der dritte Anschluss mit einem Verbraucher, wie beispielsweise einem Abgasrückführventil, verbunden ist. Mit Hilfe eines Doppelsitzventils kann an dem mit dem Verbraucher verbindbaren Ansatz ein Druck in dem Bereich zwischen dem Umgebungsdruck und dem Unterdruck eingestellt werden. Je nach Stellung des Ventils kann der dem Verbraucher zugeführte Druck in diesem Bereich eingestellt werden. Zur Betätigung des Ventils ist dieses mit einem Tauchanker-System verbunden, so dass das Ventil durch Anlegen elektrischer Signale geschaltet bzw. die Lage des Ventilkolbens variiert werden kann.

Ein elektromagnetisches Umschaltventil ist beispielsweise in DE 44 19 875 beschrieben. Derartige Ventile weisen üblicherweise drei pneumatische oder fluidische Anschlüsse auf, wobei beispielsweise zwei Einlasskanäle zu einem Auslasskanal zusammengeführt sind und der Auslasskanal wahlweise mit einem der beiden Kanäle verbindbar ist. Zum Schalten des Ventils ist in einem Verbindungskanal ein Anker angeordnet, der von einer Magnetspule umgeben ist. Der durch Schalten der Magnetspule verschiebbare Anker dient dazu, jeweils einen der beiden Einlasskanäle zu verschließen. Ebenso kann der Anker beispielsweise auch in einer Zwischenstellung angeordnet sein, so dass ein vorgegebenes Mischungsverhältnis der beiden durch die Zufuhrkanäle strömenden Fluide einstellbar ist.

Vorstehend beschriebene elektro-pneumatische Bauteile, die mindestens einen elektrischen und üblicherweise mehrere pneumatische oder fluidische Anschlüsse aufweisen, werden in Kraftfahrzeugen zur Steuerung von Verbrauchern, wie Abgasrückführventile oder Umschaltventile eingesetzt. Da diese elektro-pneumatischen Bauteile vibrationssempfindlich sind, werden sie in dem Kraftfahrzeug einzeln verschraubt und hierbei mit Schwingungsdämpfern beispielsweise an der Karosserie oder einem anderen Teil des Kraftfahrzeugs befestigt. Nach der schwingungsgedämpften Montage der Bauteile im Kraftfahrzeug werden diese einzeln verkabelt und mit den entsprechenden Schläuchen verbunden. Die Montage derartiger elektro-pneumatischer Bauteile ist somit äußerst aufwendig und daher kostenintensiv.

Aus der gattungsbildenden EP 0 691 250 ist eine Halterung für Spulen eines ABS-Systems bekannt. In der in den Figuren 8 bis 11 dargestellten Ausführungsform ist ein Gehäuse dargestellt, dass mehrere Durchgangsöffnungen aufweist. In den Durchgangsöffnungen können Spulen mit den zugehörigen Bauteilen, wie insbesondere einer Halterung und einem topfförmigen Magnet angeordnet werden. Die Halterungen weisen Rastelemente auf, die mit Ansätzen des Gehäuses zusammen wirken. Durch Einschieben der Spulen in die Durchgangsöffnungen von unten erfolgt ein Einrasten der Rastelemente hinter die Ansätze des Gehäuses. Nach dem Einsetzen der Spulen in das Gehäuse von unten kann das Gehäuse mit einer Platte verbunden werden. Die Platte kann sodann über eine entsprechende Halterung im Fahrzeug angeordnet werden.

Aufgabe der Erfindung ist es, die Montage von elektro-pneumatischen Bauteilen zu vereinfachen.

Die Lösung der Aufgabe erfolgt erfindungsgemäß durch die Merkmale des Anspruchs 1.

Erfindungsgemäß ist eine gemeinsame Halterung für mehrere elektro-pneumatische Bauteile für Kraftfahrzeuge vorgesehen. Die Halterung weist eine Grundplatte mit Befestigungselementen zum Befestigen der Halterung im Kraftfahrzeug auf. Über diese Befestigungselemente kann die Grundplatte beispielsweise aufgrund der Zwischenschaltung von Schwingungsdämpfern im Kraftfahrzeug befestigt werden. Es ist somit nur ein Befestigen der Grundplatte und nicht jedes einzelnen elektro-pneumatischen Bauteils erforderlich. Bereits hierdurch kann bei der Montage Zeit und damit Kosten eingespart werden.

Erfindungsgemäß sind mit der Grundplatte Halteelemente zum lösbaren Halten der elektro-pneumatischen Bauteile vorgesehen. Bei den Halteelementen handelt es sich beispielsweise um Federbügel, Rastverbindungen oder dergleichen. Die Halteelemente sind vorzugsweise derart ausgebildet, dass die elektro-pneumatischen Bauteile auf einfache Weise beispielsweise durch Eindrücken in eine Rastverbindung oder dergleichen mit der Grundplatte verbunden werden können. Dies hat insbesondere den Vorteil, dass ein Verbinden der elektro-pneumatischen Bauteile mit der Grundplatte als Vormontageschritt erfolgen kann und die vormontierte Grundplatte sodann beispielsweise während des Fließbandprozesses in dem Kraftfahrzeug montiert werden kann. Hierdurch kann eine weitere Kostenreduzierung erfolgen. Ferner sind die Bauteile leicht auswechselbar.

Da es sich bei elektro-pneumatischen Bauteilen um schwingungs- und stoßempfindliche Bauteile handelt, weist die erfindungsgemäße Halterung ein Einspannelement auf. Durch das Einspannelement werden die einzelnen elektro-pneumatischen Bauteile gegen ein Widerlager gedrückt und somit schwingungsfest in der Halterung fixiert. Durch das Vorsehen des Einspannelements können insbesondere Fertigungstoleranzen ausgeglichen werden. Durch das vorzugsweise als elastisches Bauteil ausgebildete Einspannelement ist somit sichergestellt, dass die elektro-pneumatischen Bauteile in der Halterung schwingungsfest fixiert sind. Hierbei ist das Einspannelement vorzugsweise derart ausgelegt, dass auch bei der ungünstigsten Addition von Toleranzen kein Klappern oder Vibrieren der elektro-pneumatischen Bauteile in der Halterung auftreten kann. Dies ist insbesondere mit einem elastischen Einspannelement realisierbar, das beim Montieren der elektro-pneumatischen Bauteile zusammengedrückt wird und das Bauteil gegen ein Widerlager drückt.

Jedes Halteelemente weist ein elastisches Haltearmpaar auf. Die beiden vorzugsweise einander gegenüberliegend angeordneten Haltearme sind elastisch mit der Grundplatte der Halterung verbunden. Die Haltearme weisen Ansätze auf, die das elektro-pneumatische Bauteil teilweise umgreifen. Das Bauteil kann somit durch einfaches Eindrücken zwischen die beiden Haltearme montiert werden.

Vorzugsweise sind die Halteelemente als Rastelemente ausgebildet.

Besonders bevorzugt ist es, hierbei die Ansätze derart auszubilden, dass sie gleichzeitig als Widerlager für das Einspannelement dienen. Die Ansätze weisen somit die Doppelfunktion auf, einerseits als Rastnase und andererseits als Widerlager zu dienen. Bei dieser Ausführungsform' ist als Einspannelement beispielsweise eine auf der Grundplatte den Widerlagern gegenüberliegendes elastisches Plättchen, wie eine Gummischeibe, vorgesehen. Es ist jedoch auch möglich, das Einspannelement als federnde Rippe auszubilden, die mit der Grundplatte verbunden, vorzugsweise an diese angespritzt ist. Auch eine derart elastisch federnde Rippe bewirkt ein Drücken der elektro-pneumatischen Bauteile gegen das Widerlager.

Eine besonders bevorzugte Ausführungsform der erfindungsgemäßen Halterung weist einen mit der Grundplatte verbindbaren Deckel auf, so dass die elektro-pneumatischen Bauteile innerhalb eines durch die Grundplatte und den Deckel gebildeten Gehäuses angeordnet sind. Vorzugsweise ist zwischen dem Deckel und der Grundplatte ein Dichtelement vorgesehen. Zur Ausbildung des Gehäuses ist die Grundplatte entweder einstückig mit Seitenwänden verbunden, so dass sich eine Art Schachtel ergibt, auf die der Deckel aufgelegt und mit dieser über eine Schnappverbindung oder dergleichen verbunden werden kann, oder die Seitenwände sind fest mit dem Deckel verbunden, so dass der Deckel auf eine im wesentlichen ebene Grundplatte aufgesetzt wird.

Besonders bevorzugt ist es, den Deckel und/oder die Grundplatte derart auszubilden, dass in dem Deckel und/oder der Grundplatte Kontaktelemente vorgesehen sind, die mit elektrischen Anschlüssen der einzelnen elektro-pneumatischen Bauteile verbindbar sind. Hierbei sind die Kontaktelemente mit beispielsweise in den Deckel oder die Grundplatte eingegossenen elektrischen Leitungen verbunden. Insbesondere sind hierbei die Kontaktelemente derart angeordnet, dass beim Einstecken der elektro-pneumatischen Bauteile in die Halteelemente oder beim Verschließen der Halterung mit dem Deckel automatisch ein elektrischer Kontakt zwischen den Kontaktelementen und den Anschlüssen der elektro-pneumatischen Bauteile hergestellt wird.

Besonders bevorzugt ist es ferner, dass pneumatische Anschlüsse der einzelnen elektro-pneumatischen Bauteile über Pneumatikleitungen oder -schläuche zusammengeführt sind. Insbesondere bei einer Halterung, in der mehrere elektro-pneumatische Bauteile vorhanden sind, bei denen ein Anschluss mit dem selben Druckerzeuger verbunden wird, ist es möglich, diese Anschlüsse zusammenzuführen. Bei elektro-pneumatischen Druckwandlern sind dies üblicherweise die Anschlüsse, die mit einem Unterdruckerzeuger, wie dem Luftansaugsystem, und diejenigen Anschlüsse, die mit Umgebungs- bzw. Atmosphärendruck verbunden sind.

Besonders bevorzugt ist es, diese Pneumatikleitungen ebenfalls im Deckel oder in der Grundplatte vorzusehen, wobei die Anschlüsse an diese Pneumatikleitungen sodann derart angeordnet sind, dass bereits beim Montieren der einzelnen elektro-pneumatischen Bauteile oder beim Verschließen des Gehäuses mit dem Deckel automatisch eine Verbindung der Anschlussstücke mit den Pneumatikleitungen erfolgt.

Nachfolgend wird die Erfindung anhand bevorzugter Ausführungsformen unter Bezugnahme auf die anliegenden Zeichnungen näher erläutert.

Es zeigen:
- Fig. 1: eine schematische Vorderansicht einer ersten Ausführungsform der Erfindung,
- Fig. 2: eine schematische Draufsicht der in Fig. 1 dargestellten Halterung,
- Fig. 3: eine schematische Draufsicht einer zweiten Ausführungsform der Erfindung,
- Fig. 4: eine schematische Unteransicht des Deckels für die in Fig. 3 dargestellte Ausführungsform und
- Fig. 5: eine schematische Seitenansicht des Deckels.

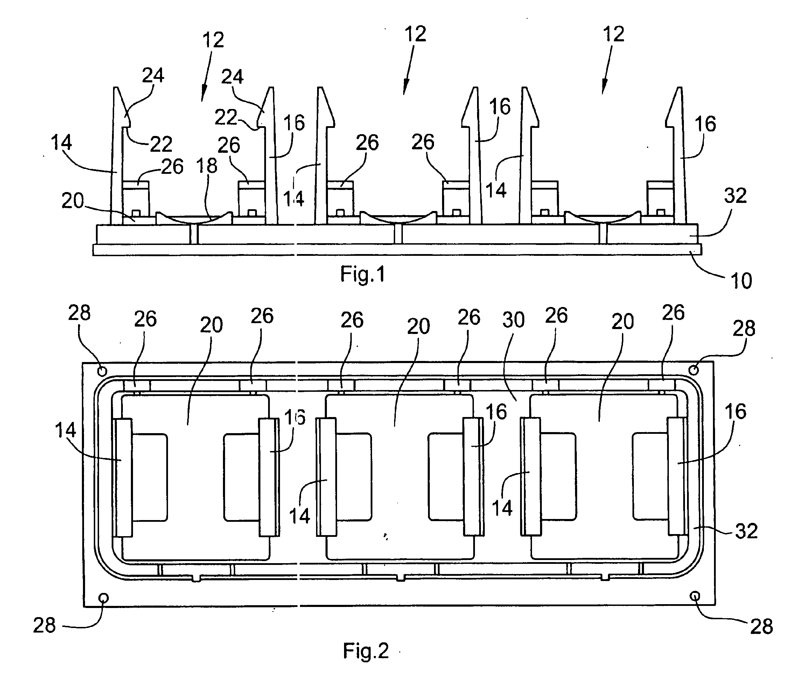

Die Halterung für elektro-pneumatische Bauteile für Kraftfahrzeuge weist eine Grundplatte 10 auf. Mit der Grundplatte 10 sind im dargestellten Ausführungsbeispiel drei Haltelemente 12 für die elektro-pneumatischen Bauteile verbunden. Die Halteelemente 12 weisen jeweils ein aus zwei Haltearmen 14,16 gebildetes Haltearmepaar auf, wobei jedes Haltearmepaar 14,16 zur Aufnahme eines elektro-pneumatischen Bauteils dient. Hierzu wird das elektro-pneumatische Bauteil in Fig. 1 von Oben nach unten bewegt, so dass die beiden Haltearme 14,16 auseinander gedrückt werden und sobald das elektro-pneumatische Bauteil vollständig eingeführt ist, sich wieder aufeinander zu bewegen bzw. zusammenschnappen. Das elektro-pneumatische Bauteil liegt sodann mit seiner Unterseite auf einer Führungsausnehmung 18, die im dargestellten Ausführungsbeispiel konkav ausgebildet ist, sowie auf einem als Einspannelement dienenden elastischen Plättchen 20 auf. Hierdurch wird das elastische Plättchen 20 zusammengedrückt, so dass durch das elastische Plättchen 20 das elektro-pneumatische Bauteil in Fig. 1 nach oben gedrückt wird. Hierbei wird eine Anlagefläche des Gehäuses des elektro-pneumatischen Bauteils gegen Widerlager 22 gedrückt. Die Widerlager sind durch Ansätze 24 der beiden Haltearme 14,16 ausgebildet. Das elektro-pneumatische Bauteil ist somit zwischen dem elastischen Plättchen 20 und den Widerlagern 22 der Ansätze 24 eingespannt und in dieser Lage schwingungsfest gehalten.

Zusätzlich kann jedes der Halteelemente 12 zwei weitere flexibel mit der Grundplatte 10 verbundene Rastarme 26 aufweisen, die eine weitere Fixierung der elektro-pneumatischen Bauteile in der Halterung gewährleisten.

Das Einspannelement 20, bei dem es sich im dargestellten Ausführungsbeispiel um ein elastische Plättchen, wie eine Gummischeibe, handelt, weist vorzugsweise eine Doppel-T-Form auf (Fig. 2). Hierdurch ist es möglich, durch die auftretende Verformung entsprechende Kräfte auf das elektro-pneumatische Bauteil auszuüben, so dass dieses zwischen dem Einspannelement 20 und den Widerlagern 22 schwingungsfest fixiert ist. Insbesondere werden durch das Einspannelement 20 Toleranzen ausgeglichen.

Ferner weist die Grundplatte Befestigungselemente 28 in Form von Durchgangsbohrungen auf. In diesen Durchgangsbohrungen 28 können Dämpfungselemente vorgesehen sein, so dass die Grundplatte 10 über Schrauben oder andere Befestigungsmittel durch Zwischenschaltung der Dämpfungselemente im Kraftfahrzeug angeordnet werden kann. Die gesamte Halterung für die elektro-pneumatischen Bauteile weist somit eine gemeinsame Schwingungsdämpfung auf. Dies hat den Vorteil, dass nicht jedes einzelne elektro-pneumatische Bauteil schwingungsgedämpft werden muss.

Zur leichteren Montage weist die Grundplatte 10 eine Vertiefung 30 auf. Dies hat den Vorteil, dass die Einspannelemente 20 auf einfache Weise in die Vertiefung 30 zwischen jeweils ein Haltearmpaar 14,16 eingelegt werden können und nicht verrutschen. Die Vertiefung 30 ist im dargestellten Ausführungsbeispiel durch einen Rand 32 gebildet.

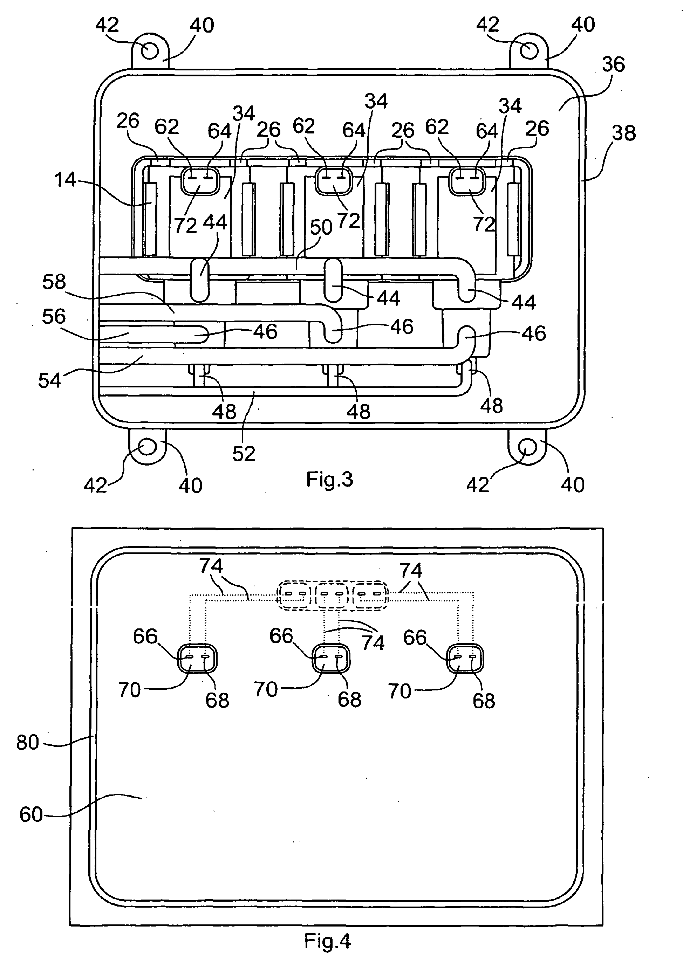

Bei der zweiten bevorzugten Ausführungsform (Fign. 3-5) handelt es sich um eine prinzipiell der ersten Ausführungsform (Fign. 1 und 2) entsprechende Ausführungsform, die jedoch in einem verschließbaren Gehäuse angeordnet ist. Hierbei sind entsprechende oder ähnliche Bestandteile mit den selben Bezugszeichen bezeichnet.

Insbesondere die Halteelemente 12, die durch die beiden Haltearme 14,16 gebildet sind, sind bei der zweiten bevorzugten Ausführungsform identisch mit denjenigen der ersten Ausführungsform. Unterhalb der in Fig. 3 dargestellten elektro-pneumatischen Bauteile 34 sind zur schwingungsfesten Fixierung ebenfalls die Einspannelemente 20 vorgesehen, die die elektro-pneumatischen Bauteile 34 in Fig. 3 aus der Zeichenebene heraus gegen die Widerlager 22 der Haltearme 14,16 drücken.

Im Unterschied zu der ersten Ausführungsform (Fign. 1 und 2) ist an Stelle der Grundplatte 10 eine Grundplatte 36 vorgesehen, die zur Bildung eines Gehäuseunterteiles mit einer umlaufenden Wand 38 verbunden ist. Die Höhe der Wand ist so gewählt, dass die elektro-pneumatischen Bauteile 34 vollständig innerhalb des Gehäuseteils angeordnet sind. Zur einfachen Befestigung der zweiten Ausführungsform der Halterung sind Laschen oder Ansätze 40 mit der Grundplatte 36 verbunden, die Befestigungselemente 42 aufweisen, die den Befestigungselementen 28 entsprechen und ebenfalls zur gedämpften Befestigung der gesamten Halterung im Kraftfahrzeug dienen.

Als elektro-pneumatische Bauteile sind in Fig. 3 elektro-pneumatische Druckwandler 34 dargestellt, wobei jeder elektro-pneumatische Druckwandler 34 drei pneumatische Anschlüsse 44,46,48 aufweist. Die pneumatischen Anschlüsse 44 sind mit Umgebungsdruck verbunden. Da dies für alle drei elektro-pneumatischen Druckwandler 34 gilt, sind die Anschlüsse 44 erfindungsgemäß mit einer einzigen gemeinsamen Pneumatikleitung 50 verbunden. Die Pneumatikleitung 50 ist in Richtung der Gehäusewand 38 geführt und endet in dieser. Es ist somit möglich, an die Pneumatikleitung 50 von außen einen Schlauch oder eine Leitung anzustecken und mit der Pneumatikleitung 50 zu verbinden.

Die Anschlüsse 48 sind mit einem Unterdruckerzeuger, wie beispielsweise dem Luftansaugsystem einer Brennkraftmaschine, verbunden. Da bei den drei in der Halterung angeordneten elektro-pneumatischen Druckwandlern 34 sämtliche Anschlüsse 48 mit dem selben Unterdruckerzeuger verbunden sind, kann dies wiederum über eine gemeinsame Pneumatikleitung 52 geschehen. Die Pneumatikleitung 52 ist in Richtung der Gehäusewand 38 geführt und endet in dieser, so dass sie von außen mit einer entsprechenden Leitung oder einem Schlauch verbunden werden kann.

Die drei Anschlüsse 46 der drei Druckwandler 34 sind mit unterschiedlichen Verbrauchern verbunden. Es ist daher nicht möglich, diese drei Leitungen zusammenzufassen. Vielmehr sind drei Pneumatikleitungen 54,56,58 zu der Gehäusewand 38 geführt und enden in dieser, so dass auch diese Leitungen von außen mit entsprechenden Leitungen oder Schläuchen verbunden werden können.

Die aus der Grundplatte 36 und der Seitenwand 38 gebildete Gehäusehälfte kann mit einem Deckel 60 (Fig. 4) verschlossen werden. Um ein vollständiges Vormontieren der elektro-pneumatischen Bauteile 34 in dem Gehäuse zu ermöglichen, sind nicht nur die pneumatischen Anschlüsse 44,46,48 der drei Bauteile 34, sondern auch die elektrischen Anschlüsse 62,64 (Fig. 3) nach außen geführt. Hierzu sind an der Deckelinnenseite Kontaktelemente 66,68 vorgesehen, die jeweils in einem Ansatz 70 angeordnet sind. Beim Auflegen des Deckels 60 auf die Halterung werden die Ansätze 70 automatisch in entsprechenden Ausnehmungen 72 der Bauteile 34 eingeführt, so dass ein automatisches Verbinden der Kontakte 62,64 mit den Kontaktelementen 66,68 erfolgt. Die Kontaktelemente 66,68 sind sodann über Leitungen 74, die beispielsweise in den Deckel eingegossen sind, nach außen zu einem Steckerelement 76 geführt. In das Steckelement 76 kann ein einzelner Stecker mit sechs Polen eingesteckt werden, so dass durch Einstecken eines einzigen Steckers der elektrische Kontakt zu sämtlichen elektro-pneumatischen Bauteilen 34 hergestellt ist.

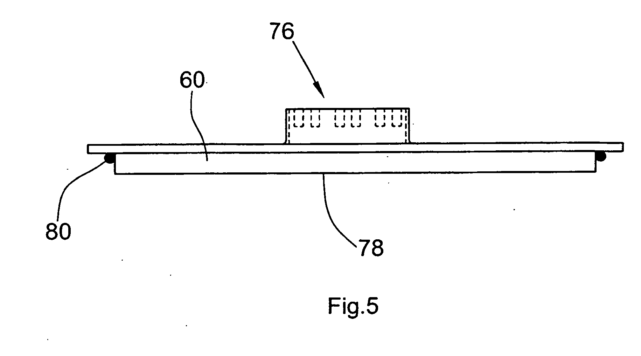

Der Deckel 60 weist an der Innenseite einen Vorsprung 78 (Fig. 5) auf, der die Innenabmessungen der umlaufenden Wand 38 aufweist. Hierdurch ist beim Aufsetzen des Deckels auf die Gehäusehälfte eine ausreichende Führung gewährleistet. Ferner ist der Ansatz 78 von einem Dichtring 80 umgeben. Der Deckel 60 kann beispielsweise durch einen Bügel oder dergleichen fest mit der Gehäusewand 38 verbunden werden, so dass ein dichtes Verschließen des Gehäuses gewährleistet ist.

## Patentansprüche

1. Halterung für Elektro-Bauteile (34) für Kraftfahrzeuge, mit einer Grundplatte (10, 36) mit Befestigungselementen (28, 42) zum Befestigen der Halterung im Kraftfahrzeug, mit der Grundplatte (10, 36) verbundenen Haltelementen (12) zum lösbaren Halten der Elektro-Bauteile (34) und einem Einspannelement (20), das das Elektro-Bauteil (34) zur schwingungsfesten Fixierung gegen ein Widerlager (22) drückt, **dadurch gekennzeichnet, dass** die Elektro-Bauteile Elektro-pneumatische Bauteile sind und dass jedes Halteelement (12) ein elastisches Haltarmpaar (14, 16) mit das elektro-pneumatische Bauteil jeweils zumindest teilweise umgreifenden Ansätzen (24) aufweist.

2. Halterung nach Anspruch 1, **dadurch gekennzeichnet, dass** die Haltelemente (12) als Rastelemente ausgebildet sind.

3. Halterung nach Anspruch 2, **dadurch gekennzeichnet, dass** die Ansätze (24) die Widerlager (22) bilden.

4. Halterung nach einem der Ansprüche 1-3, **dadurch gekennzeichnet, dass** das Einspannelement (20) ein in die Halterung einlegbares elastisches Plättchen ist.

5. Halterung nach einem der Ansprüche 1-3, **dadurch gekennzeichnet, dass** als Einspannelement mindestens eine federnde Rippe an der Grundplatte (10,36) angeformt ist.

6. Halterung nach einem der Ansprüche 1-5, **gekennzeichnet durch** einen mit der Grundplatte (10,36) verbindbaren Deckel (60).

7. Halterung nach Anspruch 6, **dadurch gekennzeichnet, dass** zwischen der Grundplatte (36) und dem Deckel (60) ein Dichtelement (80) vorgesehen ist.

8. Halterung nach einem der Ansprüche 1-7, **dadurch gekennzeichnet, dass** der Deckel (60) und die Grundplatte (10,36) Kontaktelemente (66,68) zum elektrischen Verbinden von an den elektro-pneumatischen Bauteilen vorgesehenen Anschlüssen (62,64) mit elektrischen Leitungen (74) aufweist.

9. Halterung nach Anspruch 8, **dadurch gekennzeichnet, dass** die Kontaktelemente derart in der Grundplatte (10,36) angeordnet sind, dass beim Verbinden der elektro-pneumatischen Bauteile (34) mit der Grundplatte (10,36) mittels der Halteelemente (12) automatisch ein elektrischer Kontakt zwischen den Kontaktelementen (66,68) und den Anschlüssen (62,64) hergestellt ist.

10. Halterung nach Anspruch 8, **dadurch gekennzeichnet, dass** die Kontaktelemente (66,68) derart im Deckel (60) angeordnet sind, dass beim Verschließen des Gehäuses automatisch ein elektrischer Kontakt zwischen den Kontaktelementen (66,68) und den Anschlüssen (62,64) hergestellt ist.

11. Halterung nach einem der Ansprüche 1-10, **dadurch gekennzeichnet, dass** mit der Grundplatte und/oder dem Deckel (60) ein Steckerelement (76) zum gemeinsamen Verbinden mit einem elektrischen Anschlusskabel verbunden ist.

12. Halterung nach einem der Ansprüche 1-11, **dadurch gekennzeichnet, dass** pneumatische Anschlüsse (44,48) mehrere elektro-pneumatische Bauteile (34) über eine gemeinsame Pneumatikleitung (50,52) zusammengeführt sind.

13. Halterung nach einem der Ansprüche 1-12, **dadurch gekennzeichnet, dass** die Pneumatikleitungen (50,52,54,56,58) in der Grundplatte (10,36) derart angeordnet sind, dass beim Verbinden der elektro-pneumatischen Bauteile (34) mit der Grundplatte (10,36) mittels der Halteelemente (12) automatisch eine pneumatische Verbindung zu den Anschlüssen (44,46,48) der elektro-pneumatischen Bauteile (34) hergestellt ist.

14. Halterung nach Anspruch 12, **dadurch gekennzeichnet, dass** die Pneumatikleitungen (50,52,54,56,58) in dem Deckel (60) derart angeordnet sind, dass beim Verschließen des Gehäuses automatisch eine pneumatische Verbindung zwischen den Anschlüssen (44,46,48) der elektro-pneumatischen Bauteile (34) und den Pneumatikleitungen (50,52,54,56,58) hergestellt ist.

15. Halterung nach einem der Ansprüche 1-14, **dadurch gekennzeichnet, dass** an der Grundplatte (10,36) und/oder dem Deckel (60) pneumatische und/oder elektrische Anschlusselemente (76) vorgesehen sind.

## Claims

1. A support for electric components (34) for motor vehicles, comprising a base plate (10, 36) having fastening elements (28, 42) for fastening the support in the motor vehicle, holder elements (12) connected to the base plate (10, 30) for releasably holding the electric components (34), and a clamping means (20) pressing the electric component (34) against an abutment (22) for fixing the component in a manner resistant to vibrations, **characterized in that** the electric components are electro-pneumatic components and that each holder element (12) comprises a pair of elastic holding arms (14, 16) having projections (24) that at least partly embrace the electro-pneumatic component, respectively.

2. The support of claim 1, **characterized in that** the holder elements (12) are configured as locking elements.

3. The support of claim 2, **characterized in that** the projections (24) form the abutments (22).

4. The support of one of claims 1-3, **characterized in that** the clamping element (20) is an elastic plate adapted to be placed in the support.

5. The support of one of claims 1-3, **characterized in that** at least one resilient rib is formed at the base plate (10, 36) as the clamping element.

6. The support of one of claims 1-5, **characterized by** a cover (60) connectable to the base plate (10, 36).

7. The support of claim 6, **characterized in that** a sealing element (80) is provided between the base plate (36) and the cover (60).

8. The support of one of claims 1-7, **characterized in that** the cover (60) and the base plate (10, 36) comprise contact elements (66, 68) for the electric connection of connectors (62, 64) provided at the electro-pneumatic components to electric lines (74).

9. The support of claim 8, **characterized in that** the contact elements are arranged such in the base plate (10, 36) that upon connection of the electro-pneumatic components (34) to the base plate (10, 36) by means of the holder elements (12) an electric contact is automatically established between the contact elements (66, 68) and the connectors (62, 64).

10. The support of claim 8, **characterized in that** the contact elements (66, 68) are arranged such in the cover (60) that, upon closing the housing, an electric contact is automatically established between the contact elements (66, 68) and the connectors (62, 64).

11. The support of one of claims 1 - 10, **characterized in that** a plug element (76) is connected with the base plate and/or the cover (60) for a common connection with an electric connection wire.

12. The support of one of claims 1 - 11, **characterized in that** pneumatic connectors (44, 48) of a plurality of electro-pneumatic components (34) are joined via a common pneumatic line (50, 52).

13. The support of one of claims 1-12, **characterized in that** the pneumatic lines (50, 52, 54, 56, 58) are arranged such in the base plate (10, 36) that, upon connection of the electro-pneumatic components (34) to the base plate (10, 36) by means of the holder elements (12) an electric contact with the connectors (44, 46, 48) of the electro-pneumatic components (34) is automatically established,

14. The support of claim 12, **characterized in that** the pneumatic lines (50, 52, 54, 56, 58) are arranged such in the cover (60) that, upon closing the housing, a pneumatic connection is automatically established between the connectors (44, 46, 48) of the electro-pneumatic components (34) and the pneumatic lines (50, 52, 54, 56, 58).

15. The support of one of claims 1-14, **characterized in that** pneumatic and/or electric connector elements (76) are provided at the base plate (10, 69) and/or the cover (60).

## Revendications

1. Fixation pour composants électriques (34) de véhicules automobiles, comprenant une plaque de base (10, 36) avec éléments de fixation (28, 42) pour attacher la fixation dans le véhicule automobile, des éléments de retenue (12) reliés à la plaque de base (10, 36) afin de retenir les composants électriques (34) d'une manière amovible, et un élément de serrage (20) pressant le composant électrique contre une butée (22) afin de le fixer d'une manière résistant aux oscillations, **caractérisée en ce que** les composants électriques sont des composants électro-pneumatiques, et que chaque élément de retenue (12) comprend deux bras de retenue (14, 16) élastiques ayant des saillies (24) qui chacune embrasse au moins partiellement le composant électro-pneumatique.

2. Fixation selon la revendication 1, **caractérisée en ce que** les éléments de retenue (12) sont réalisés comme des éléments de crantage.

3. Fixation selon la revendication 2, **caractérisée en ce que** les saillies (24) forment les butées (22).

4. Fixation selon une quelconque des revendications 1-3, **caractérisée en ce que** l'élément de serrage (20) est une plaquette élastique qui peut être positionnée dans la fixation.

5. Fixation selon une quelconque des revendications 1-3, **caractérisée en ce qu'**au moins une nervure résiliente est formée avec la plaque de base (10, 36) comme l'élément de serrage.

6. Fixation selon une quelconque des revendications 1-5, **caractérisée par** un couvercle (60) qui peut être relié à la plaque de base (10, 36).

7. Fixation selon la revendication 6, **caractérisée en ce que** un élément d'étanchéité (80) est prévue entre la plaque de base (36) et le couvercle (60).

8. Fixation selon une quelconque des revendications 1-7, **caractérisée en ce que** le couvercle (60) et la plaque de base (10, 36) comprennent des éléments de contact (66, 68) pour le raccordement électrique de connecteurs (62, 64), prévues aux éléments électro-pneumatiques, à des lignes électriques (74).

9. Fixation selon la revendication 8, **caractérisée en ce que** les éléments de contact sont disposés dans la plaque de base (10, 36) d'une manière que, en raccordant les composants électro-pneumatiques (34) ?a la plaque de base (10, 36) par les éléments de retenue (12), un contact électrique est automatiquement réalisé entre les éléments de contact (66, 68) et les connecteurs (62, 64).

10. Fixation selon la revendication 8, **caractérisée en ce que** les éléments de contact (66, 68) sont disposés dans le couvercle (60) d'une manière que, en fermant la boîte, un contact électrique est automatiquement réalisé entre les éléments de contact (66, 68) et les connecteurs (62, 64).

11. Fixation selon une quelconque des revendications 1-10, **caractérisée en ce qu'**un élément de prise (76) est raccordé à la plaque de base et/ou le couvercle (60) pour la connexion en commun à un câble de raccordement électrique.

12. Fixation selon une quelconque des revendications 1-11, **caractérisée en ce que** les connecteurs pneumatiques (44, 48) de plusieurs composants électro-pneumatiques (34) sont réunit au moyen d'une conduite pneumatique commune (50, 52).

13. Fixation selon une quelconque des revendications 1-12, **caractérisée en ce que** les conduites pneumatiques (50, 52, 54, 56, 58) sont disposées dans la plaque de base (10, 36) d'une manière que, en raccordant les composants électro-pneumatiques (34) à la plaque de base (10, 36) au moyen des éléments de retenue (12), une raccordement pneumatique est automatiquement réalisée aux connecteurs (44, 46, 48) des éléments électro-pneumatiques (34).

14. Fixation selon une revendication 12, **caractérisée en ce que** les conduites pneumatiques (50, 52, 54, 56, 58) are disposées dans le couvercle (60) d'une manière que, en fermant la boîte, un raccordement pneumatique est automatiquement réalisée entre les connecteurs (44, 46, 48) des composants électro-pneumatiques (34) et les conduites pneumatiques (50, 52, 54, 56, 58).

15. Fixation selon une quelconque des revendications 1-14, **caractérisée en ce que** des éléments de connexion pneumatique et/ou électrique (76) sont prévues à la plaque de base (10, 36) et/ou au couvercle (60).
